Europäisches Patentamt

European Patent Office

Office européen des brevets

(19)

(11) Publication number: 0 368 525 A1

# (12) EUROPEAN PATENT APPLICATION

(21) Application number: 89311149.2

(22) Date of filing: 27.10.89

(51) Int. Cl.5: H01S 3/097, H01S 3/225

(30) Priority: 27.10.88 CA 581441

(43) Date of publication of application:
16.05.90 Bulletin 90/20

(84) Designated Contracting States:
AT BE CH DE ES FR GB GR IT LI LU NL SE

(71) Applicant: The University of Toronto Innovations Foundation
203 College Street, Suite 205
Toronto Ontario M5T 1P9(CA)

(72) Inventor: Stoicheff, Boris P.
66 Collier Street Apartment 6B
Toronto Ontario M4W 1L9(CA)
Inventor: Efthimiopoulos, Thomas
300 Kennedy Avenue
Toronto Ontario M6P 3C3(CA)

(74) Representative: Cline, Roger Ledlie et al
EDWARD EVANS & CO. Chancery House
53-64 Chancery Lane
London WC2A 1SD(GB)

(54) Method and apparatus for generating inverted population for stimulated emission.

(57) A method and apparatus for generating an inverted population in a gas are provided. Gas is excited at one pressure, so as to give a portion of the gas the energy of a higher electronic state. The gas is then expanded to a lower pressure, so as to concentrate that portion of the gas into a reduced number of energy levels in the higher electronic state. This concentrated population should then produce an inverted population relative to a lower electronic state. Inverted populations can then be used for stimulating emission, in a variety of laser devices, or in an amplifier.

FIG. 2

# METHOD AND APPARATUS FOR GENERATING INVERTED POPULATION FOR STIMULATED EMISSION

This invention relates to the generation of inverted populations for stimulated emission generation, lasers and other devices. More particularly, it relates to lasers using gaseous media of excimers and exciplexes, and generally to lasers having emissions from bound-to-free states.

Lasers operating in the VUV region are desired for use in scientific studies of the interaction between radiation and matter, as a source to optically pump other lasers and for a variety of techniques, such as surface probing, microlithography and biological studies. As an example, intense coherent radiation in this region is necessary to measure the densities of impurities such as carbon and oxygen in plasmas in at least one of the techniques employed today.

The shortest wavelengths in readily available lasers are those of excimer lasers using argon-fluoride (ArF) gas. With fluorine ($F_2$) gas these lasers reach wavelengths of 156 nm, however operation with this gas is difficult and few are in use. The shortest wavelength in common use with ArF gas is 193 nm.

An argon excimer laser has emissions of approximately 126 nm. The first such laser employed an electron beam as the exciting energy. The laser had a great deal of power, but the electron accelerator is the size of a small room and the laser itself is half that size. The electron beam excites only a relatively small number of the argon atoms due to the narrow width of the beam compared to the gas volume. The only laser in use today is an electron-beam diode with a 700 kV and 5 kJ input power source.

The lasing effect of the argon excimer laser is produced by emissions from excited $Ar_2$ molecules, denoted with an * from now on, as opposed to excited Ar atoms, Ar*. $Ar_2$* molecules are not naturally occurring. The molecules must be created by collisions between separate atoms. A large gas volume is used in the laser to create the desired number of emissions and generate the resulting power. The collisions are encouraged by keeping the gas under a great deal of pressure, approximately 10 atmospheres.

The exciting electron beam of the argon excimer laser produces $Ar_2$* molecules of varying energy levels. The populations in these energy levels are not artificially concentrated and result in emissions from each of the energy levels. This produces light of different wavelengths or broad band width. In order to produce coherent light of shorter wavelength the resulting emissions must be shifted by anti-Stokes Raman scattering with a resulting loss in overall power and efficiency.

A technique has been developed for concentrating excited molecules into fewer energy levels with excitation by a gas discharge. This technique is called relaxation by supersonic expansion cooling and has been used to cool, mainly rotationally, and also vibrationally, various molecules, including NO and $ND_4$, and OH radicals. It was developed in order to analyze the spectra of excited and relaxed molecules and radicals which were not previously able to be analyzed. (Chemical Physics Letters; Vol. 113, Number 2, pages 129-134; Emission Spectra in a Supersonic Expansion; Huber and Sears). Authors of papers studying these types of spectra mentioned above have used the absorptive spectra in their analysis which are undesirable in lasing systems.

## SUMMARY OF THE INVENTION

In accordance with the present invention, there is provided a method of producing an inverted population in a gas comprising exciting the gas at one pressure so as to give a portion of the gas the energy of a higher electronic state, expanding the gas to a second lower pressure, so as to concentrate said portion of the gas into a reduced number of energy levels in the higher electronic state, whereby a population inversion is produced between the higher electronic state and a lower electronic state.

In most cases, it is expected that the gas will be excited into a range of energy levels, that is a range of both vibrational and rotational energy levels in the higher electronic state. However, conceivably under the appropriate conditions, the gas portion could be excited into just one vibrational energy level in the higher state.

Preferably, the gas is excited by an electronic discharge, and cooling is effected by supersonic expansion through a nozzle or the like.

Once the inverted population has been obtained, then stimulated emission can be generated.

The present invention is based on the realization that supersonic cooling in a nozzle, or an equivalent cooling technique, can be used to concentrate the populations into a few energy levels. This can then generate the required population inversion.

It is expected that the invention will be particularly applicable to a variety of excimers and exciplexes. For Argon, for example, it has been realized that, contrary to conventional teaching, it is not necessary to maintain a high pressure of the order of ten atmospheres in order to form molecular Argon. Instead, it has been found that sufficient collisions occur in or are present in the supersonic cooling nozzle to create $Ar_2^*$. The excited Argon, in a higher electronic state, is cooled so it only occupies a small number of energy levels at the bottom of that state. In the case of Argon, it has also been appreciated that these energy levels have relatively long life times, compared to higher energy levels, again facilitating creation of the population inversion. Such an effect is found in some other gases in varying degrees.

The present invention also provides a method of producing stimulated emission in a gas, comprising:

(a) electronically exciting the gas at one pressure, so as to give a portion of the gas the energy of a higher state;

(b) expanding the gas to a second, lower pressure, so as to concentrate a portion of the gas into a reduced number of energy levels in the higher electronic state, whereby a population inversion is produced between the higher electronic state and a lower electronic state; and

(c) stimulating the gas, so that the gas portion emits radiation by transition from the higher electronic state to the lower electronic state.

The present invention further provides an apparatus for producing stimulated emission, the apparatus comprising:
an inlet for pressurized gas;
an excitation source, for electronically exciting gas to give a portion of the gas the energy levels of a higher electronic state;
means for expanding and cooling the gas to concentrate said portion of the gas into a reduced number of energy levels in the higher electronic state, and hence cause a population inversion relative to a lower electronic state; and
means for causing stimulated emission and amplification of the excited and cooled gas, by transition from the higher electronic state to the lower electronic state.

The stimulated emission can occur in an amplifier or the like. Alternatively, the stimulated emission can occur in a laser cavity, equipped with mirrors in a manner such that the apparatus would then function as a laser. Where the gas is cooled by passing it through a nozzle, it is expected that a very low pressure, eg. around 1 mTorr will be necessary. In such a case, it is not necessary for the laser cavity to be within the low pressure region. The mechanical and optical components of the laser cavity can be outside the low pressure region. It is only necessary that the principal axis of the cavity pass through the region of gain, ie. the region immediately downstream from the nozzle where the stimulated emission occurs.

## BRIEF DESCRIPTION OF THE DRAWINGS

Reference will now be made, by way of example, to the accompanying drawings in describing the preferred embodiment of the present invention and in which:

Figure 1 is a graphic representation of the electronic energy levels in an argon molecule;

Figure 2 is a diagrammatic sectional view of a laser according to the preferred embodiment of the present invention; and

Figure 3 is a graphical representation of the intensity of the laser of fig. 2 versus the excitation energy employed.

## DETAILED DESCRIPTION OF THE PREFERRED EMBODIMENT

An explanation of the theoretical concepts involving argon gas energy levels will simplify the explanation of the preferred embodiment following thereafter.

In order for a laser to lase there must be a population inversion between energy states. Argon is particularly well suited to producing such an inversion.

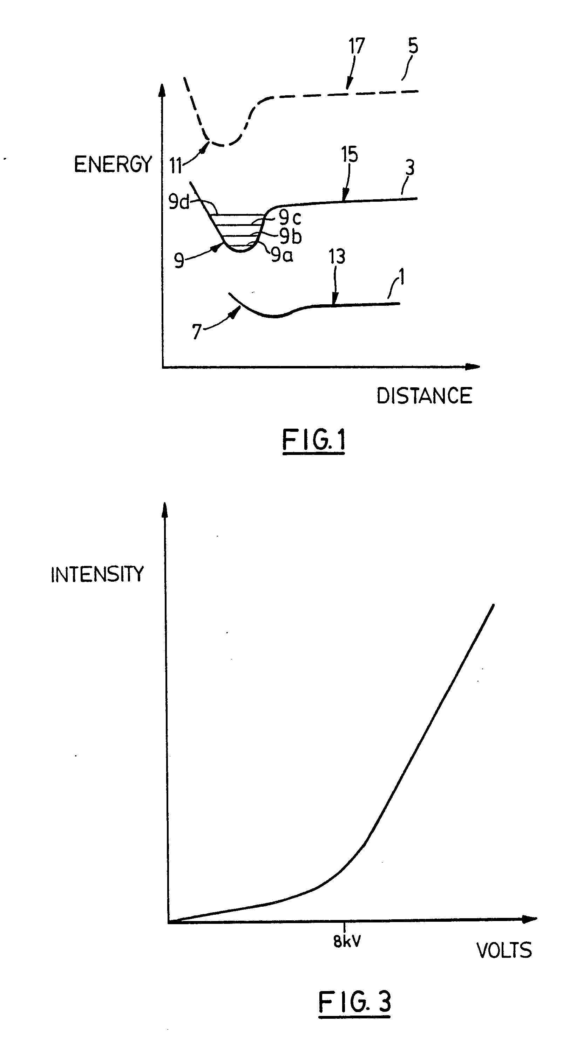

$Ar_2$ has an unstable ground state as shown in fig. 1. The independent axis is the internuclear distance between respective Ar atoms, while the dependent axis is the energy of the atoms. A lower curve 1 represents the ground state energy. A middle curve 3 represents the first excited electronic state energy. An upper curve 5, shown in dashed outline, represents the upper electronic energy states. Each curve 1,3,5 has a well portion 7,9,11 respectively and a flat portion 13,15,17 respectively. When an Ar atom is in a well portion 7,9 or 11 it is part of an $Ar_2$ molecule. When an Ar atom is in a flat portion it is a separate atom.

The well 7 is far more shallow than the other wells 9,11. An $Ar_2$ molecule in the well 7 requires very little additional energy to split into separate Ar atoms. A simple collision with a container which confines the $Ar_2$ molecule will split the atoms. This means very few $Ar_2$ molecules will populate the well 7.

To create a population inversion the unexcited Ar atoms in the flat portion 13 are excited into the flat portion 15 or the upper flat portions 17. Excited atoms are denoted as $Ar^*$.

When an $Ar^*$ collides with an Ar or another $Ar^*$ it will create an excited $Ar_2^*$ molecule and slip into one of the wells 9 or 11. For now we will only examine those $Ar_2^*$ in the well 9.

As there are relatively few $Ar_2$ in the well 7 and more $Ar_2^*$ in the well 9 there is a population inversion.

The inventors have further examined the energy curves 1,3,5 and discovered a storage energy level at the bottom of the well 9. The lines 9a,9b,9c,9d in the well 9 represent a number of different rotational and vibrational energy levels within the electronic state 3. These lines 9a,9b,9c,9d do not represent all of the energy levels, but will serve to illustrate the phenomena discovered.

The lines 9a-9d have an interesting characteristic. $Ar_2^*$ in the lowest energy level 9a of the well 9 will take longer to decay than the $Ar_2^*$ atoms in the other states 9b,9c,9d. The storage time is approximately 3 microseconds. This means a process relaxing (cooling) the $Ar_2^*$ in the energy levels within the storage time of the $Ar_2^*$ of line 9a will concentrate the $Ar_2^*$ to substantially one energy level 9a for the well 9.

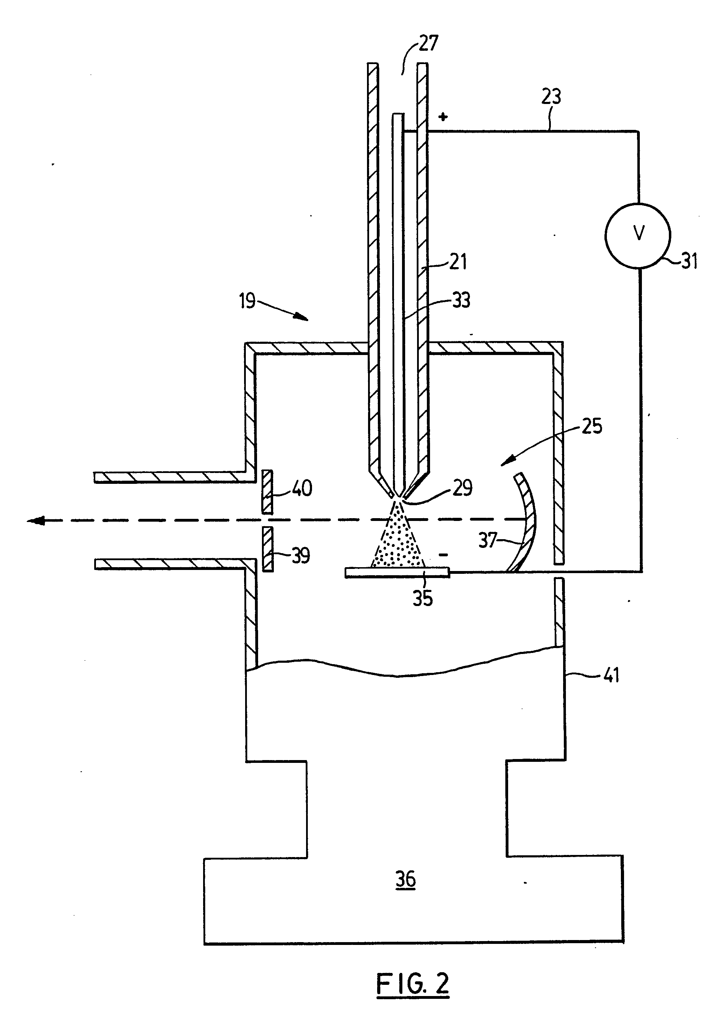

Reference will now be made to fig. 2, in describing a supersonically cooled laser 19. The laser 19 has a conduit 21, an exciter 23 and a laser cavity 25.

The conduit 21 has a gas input 27 and a nozzle 29. The conduit 21 the inventors employed in experiments was constructed of quartz. The diameter of the quartz in the conduit was approximately 1 cm. The nozzle 29 was approximately 300 microns in diameter.

The exciter 23 combines a voltage source 31 with a first electrode 33 and a second electrode 35. The exciter 23 shown in the preferred embodiment is a discharge energy source 23. The electrode 33 is a wire filament 33 in the conduit 21. The tip of electrode 33 is close to the nozzle 29. The electrode 35, the nozzle 29 and the cavity 25 are enclosed in a chamber 41 which is connected to a vacuum pump 36 (indicated schematically).

The cavity 25 lies near the conduit 21 beyond the nozzle 29. The electrode 35 is 15 mm below the nozzle 29. The cavity 25 has a first concave mirror 37 and a second flat mirror 39 as is known in the art. The cavity 25 may be more sophisticated to provide tuning where necessary via a prism or grating or other such refinements. The cavity 25 shown is the most rudimentary to explain the concepts.

In operation, argon gas at approximately 1 atm is fed into the input 27. The pump 36 draws the gas through the conduit 21 and the container and maintains a very low pressure, of approximately 1 mTorr, in the chamber 41. The voltage source 31 is switched to create a discharge between the electrodes 33,35. The electrode 33 is sufficiently close to the nozzle 29 to allow the discharge to take place.

The discharge imparts excitation energy into the gas to excite Ar atoms in the conduit 21 near the nozzle 29 to $Ar^*$. The $Ar^*$ are slowed by the funnelling and constricting effect in the nozzle 29. The $Ar^*$ collide with unexcited Argon atoms, Ar, and combine to form $Ar_2^*$. Almost all of the $Ar_2^*$ are vibrationally cooled by the time they pass through the nozzle 29, and rotationally cooled on expansion in the evacuated chamber 41. This puts the $Ar_2^*$ into the well 9 or into the well 11 of fig. 1. The $Ar_2^*$ would decay after their storage time has elapsed. The storage time is sufficient to allow the cooled $Ar_2^*$ out of the nozzle 29, but not long enough for the fig. The $Ar_2^*$ to disperse and lose added power their density can give. The electrode 33 is also sufficiently close to the nozzle 29 for the $Ar^{2^*}$ to not decay prior to leaving the nozzle 29.

Emissions occur during the storage time and are in all directions. The emissions close to the perpendicular to the axis of the conduit 21 are caught by the laser cavity 25 as is known in the art and reflected between the mirrors 37,39. The mirror 39 is provided with a central opening 40. The intention is that radiation will be captured by the mirrors 37, 39 and output through the opening 40. The cavity 25 must, of course be near enough to the nozzle (approx. 5 mm) for a substantial number of $Ar_2^*$ to be within the cavity 25 prior to their decay. The reflected emissions stimulate further coherent emissions from the $Ar_2^*$ as they pass by the nozzle 29 and into the volume of the laser cavity 25.

Increases in pressure in the conduit 21 are possible using stronger and/or thicker materials. Increased pressures create greater collisions at the nozzle 29 and more $Ar_2^*$. It is noted that cooling depends on the pressure ratio across the nozzle 29. Consequently, if the pressure in the chamber 41 is increased, this could cause a significant increase in the pressure required at the input 27.

The substantial vacuum created by the pump 36 also serves to prevent the emitted light from being absorbed by impurities in the cavity 25. This allows the laser 19 to be operated continuously for greater periods of time. As well, it is expected that the laser 19 is particularly well suited to operation for scientific experiments in space. In this case, the chamber 41 is no longer necessary.

In alternative terrestrial systems the electrode 35 could be positioned inside the conduit 21 alongside the electrode 33, and the container 41 would be retained in its original position. The discharge would then take place between the electrodes 33, 35 fully inside the nozzle 29. Furthermore, the exciter 23 could take the form of a non-discharge energy source, not shown, such as an electron beam. Of course some of the size advantages of the preferred embodiment may be lost thereby.

As shown in fig. 3, the intensity of the light increases with the voltage at the source 31. The intensity increases more rapidly around the 8 kV mark. Experiments have been conducted at up to 20 kV to date. It appears much of the energy from the source is going into the discharge below the 8 kV. As will be evident to one skilled in the art, the intensity of the light will not increase without bound. At higher voltage levels energy will go into ionization of the atoms and light intensity will decrease. However, molecular ions may also be formed in excited electronic states, with population inversion, and provide stimulated emission at other wavelengths.

A test laser 19 having the parameters discussed herein was operated under pulse operation. The laser effect was achieved. In this case the mirrors 37,39 were coated with aluminum. The mirrors were later examined, and from burn damage they received, it is estimated that there was generated an energy density of over 100 mJ/cm². This is very powerful considering the small volume of gas used. Mirrors with higher energy thresholds, such as silicon carbide should be able to handle the energy density levels for longer periods.

It is to be appreciated that the laser 19 can be extremely compact and can have a size approximately as shown. Whilst the vacuum pump, voltage source, gas tanks, regulators, etc., will take up some space. It will still be considerably more compact than the Argon excimer loser utilizing electron beam excitation, mentioned above. The laser 19 can be arranged to operate either continuously or pulsed. When it is pulsed, at frequencies in the range of 1-5 Hz, both the voltage source 31 and gas supply to the gas input 27 are pulsed.

To increase the amount of gas used and the total energy output from the laser 19, the conduit 21 can be stretched so the nozzle 29 takes the form of a slit. The first electrode 33 would be similarly stretched, or a number of electrodes provided across the nozzle 29. Also, a series of such conduits 21 could be used. Each conduit 21 would have a slot-shaped nozzle 29 with the nozzles 29 disposed in a row or several rows parallel to the laser cavity 25 and with the slots aligned for maximum efficiency.

Earlier we restricted discussion to emissions caused by molecules decaying from the first electronic energy state (well 9) to the ground state (well 7). Emissions from the upper states (well 11) can occur with sufficient excitation and will be at even lower wavelengths than 126 nm.

The inventors have studied energy curves for the other noble gases; He, Ne, Kr and Xe. The curves take on a similar form to those of fig. 1. These gases should lase using a laser 19. The excitation voltage will be lesser or greater depending on the gas used. The inventors have performed experiments for Ne similar to those described for Ar with the predicted results. The respective first electronic state to ground state emissions for the other noble gases occur at approximately 50 nm, 71 nm, 146 nm and 176 nm. Higher state to ground state emissions may produce even shorter wavelengths.

It should also be possible to use a combination of these gases to achieve emissions in the wavelengths between the above spectra.

Whilst one preferred embodiment of the invention has been described with reference to the drawings, it will be appreciated that a wide variety of variations are possible within the broad scope of the invention. By way of example, some, but not all, alternatives are outlined below.

With regard to the pressure differential or ratio across the nozzle 29, this can be varied to give the desire degree of cooling. Similarly, the voltage between the electrodes 33,35, and hence the field in the discharge, can be varied to meet the desired discharge characteristics. In general, these parameters will be different from those used for the earlier technique for spectroscopic analysis. Thus, in order to give a substantial portion of the gas a higher electronic energy level, a higher voltage or field would be used. The earlier technique did not use a voltage or field sufficiently high to give this effect.

A variety of excitation sources can be used. Thus, an electronic beam or an optical source could be used, instead of an electrical discharge.

For the expansion and cooling, again it is conceivable that a number of different techniques can be used, depending upon the life and storage time for the energy levels of the gas employed. Conceivably, an apparatus providing for reversible, as opposed to irreversible, expansion could be used.

The described apparatus is intended primarily for pulsed operation, it can be operated on a continuous basis. For high power levels, the nozzle tip could be cooled.

A variety of materials can be used, depending upon the power output of the device and its intended use, etc. Thus, the conduit 21 forming the nozzle 29 can be formed from ceramic, quartz, sapphire, or a hard metal alloy, for example. Where a metal alloy is used, it could form one of the electrodes. Appropriate materials would be used for the mirrors and windows of the system.

Instead of the electrode 39, a second nozzle can be provided facing the first nozzle 29. One nozzle would then form an anode and the other nozzle a cathode, thereby eliminating the necessity for a separate electrode.

It will also be appreciated that a priority of nozzles of various shapes and configurations can be provided. Thus, the nozzles could be provided as slots or holes in a variety of patterns. In particular, it is envisaged that nozzles arranged as slots aligned with the axis of the laser cavity will be particularly suitable.

As to other gases, it is anticipated that a variety of excimers and exciplexes, ie gases having ground state 7, could be used. For example, possible gases are, halides of the noble gases: hydrides of the noble gases; oxides of the noble gases; alkalis of the noble gases; metals, eg. mercury, cadmium, zinc, etc.; and metal halides. Additionally, the laser system should be usable with a variety of polyatomic excimers and exciplexes. It is also anticipated that the system could be used to rotationally cool presently known laser gases, such as nitrogen, carbon monoxide and carbon dioxide, and thus to concentrate population in fewer energy levels, leading to more powerful output and greater efficiency.

Also, in addition to excimers and exciplexes, there are gases which have a stable ground state, but have a higher state having a repulsive or weakly bound characteristic with a shallow well. For such gases, a transition from an even higher electronic state to the repulsive state as a lower electronic state can form a laser system.

As to potential uses for the method of the present invention, it can be used for a variety of laser devices. Thus it could be used in Raman lasers, Q-switched lasers, mode-locked lasers, etc. It could also be used for a variety of amplifiers. Finally the mirrors could alternatively be located outside the cavity with the cavity having transparent walls.

## Claims

1. A method of producing an inverted population in a gas comprising:

(a) exciting the gas at one pressure, so as to give a portion of the gas the energy of a higher electronic state;

(b) expanding the gas to a lower pressure, so as to concentrate said portion of the gas into a reduced number of energy levels in the higher electronic state, whereby a population inversion is produced between the higher electronic state and a lower electronic state.

2. A method as claimed in claim 1, wherein the gas is excited in step (a) by means of an electrical discharge.

3. A method as claimed in claim 1 or 2, wherein the gas is expanded to the lower pressure in step (b) through a nozzle.

4. A method as claimed in claim 2, wherein the gas is expanded in (b) through a nozzle, and wherein in (a) the gas is excited by means of an electrical discharge between a pair of electrodes, with one electrode being located upstream of the nozzle and the other electrode being located at the nozzle or downstream from the nozzle.

5. A method as claimed in claim 1, 2 or 4, wherein the said lower pressure is approximately 1 mTorr.

6. A method as claimed in claim 1, 2 or 4, wherein the ratio between said one pressure and the lower pressure is at least 1,000.

7. A method as claimed in claim 1, wherein the step (b) is effected by expanding the gas through a nozzle which has an elongated slot-shape.

8. A method as claimed in claim 1, 2 or 4, wherein the gas comprises an excimer or exciplex.

9. A method as claimed in claim 1, 2 or 4, wherein the gas is selected from the group comprising: noble gases; halides of noble gases; hydrides of noble gases; oxides of noble gases; alkalis of noble gases; metals; metal halides; nitrogen; carbon monoxide; and carbon dioxide.

10. A method as claimed in any preceding claim, which is used to produce stimulated emission and amplification in a gas, and wherein after step (b), the following additional step is carried out:

(c) stimulating the gas, to effect emission of radiation and amplification by transition from the higher electronic state to the lower electronic state.

11. A method as claimed in claim 10, wherein said lower pressure is approximately 1 mTorr and the ratio between said one pressure and the lower pressure is greater than 100,000.

12. A method as claimed in claim 10 or 11, wherein step (c) is effected in a laser cavity, which is equipped with mirrors for reflecting the radiation back through the laser cavity, the mirrors include means for permitting a portion of the radiation to leave the laser cavity.

13. A laser apparatus employing gas as an emission source, the laser comprising:
- an input for the gas at one pressure;
- an excitation source for imparting an excitation energy to gas in the input to give a portion of the gas the energy of a higher electronic state;
- expansion means connected to the input downstream from the excitation source and having an outlet for expanded gas for expanding gas to a lower pressure, so as to concentrate said portion of the gas into a reduced number of energy levels and produce population inversion between the higher electronic state and a lower electronic state.
- a laser cavity means having a principal axis mounted adjacent the outlet of the expansion means so that the expanded gas passes through the principal axis thereof, whereby, in use, the expanded and excited gas is stimulated in the laser cavity to emit radiation by transition from the higher electronic state to a lower electronic state.

14. A laser according to claim 13, wherein the expansion means comprises a nozzle.

15. A laser according to claim 13, wherein the nozzle is shaped in the form of a slot which is aligned with the principal axis of the laser cavity.

16. A laser as claimed in claim 15, wherein the expansion means comprises a plurality of slots, all of which are aligned with the principal axis of the laser cavity.

17. A laser according to claim 13, 14, 15 or 16, wherein the excitation source comprises a discharge energy source having a voltage source connected between first and second electrodes.

18. A laser according to claim 13, 14, 15, 16 or 17, wherein the expansion means comprises a nozzle and wherein the first electrode is located within the input adjacent the nozzle, and the second electrode is located downstream from the nozzle outside of the input.

19. A laser according to any of claim 13 to 18, wherein the conduit is manufactured from one of quartz, ceramic, sapphire, and a hard metal alloy.

FIG.1

FIG. 3

EP 0 368 525 A1

FIG. 2

European Patent Office

**EUROPEAN SEARCH REPORT**

Application Number

EP 89 31 1149

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | JOURNAL CHEMICAL PHYSICS, vol. 89, no. 5, September 1988, pages 2609-2614; D. FRYE et al.: "Vibration-rotation spectroscopy by stimulated emission pumping in a supersonic beam: a-Axis coriolls coupled v4=1 and v8=1 levels of y1Ag glyoxal" * Abstract; page 2609, column 1, lines 18-21 * | 1,13 | H 01 S 3/097 H 01 S 3/225 |
| A | REV. SCI. INSTRUM., vol. 58, no. 5, May 1987, pages 812-816; K.H.C. BALDWIN et al.: "Inert gas excimer radiation from a free jet expansion" * page 812, column 1, lines 15-29; column 2, lines 3-9; page 816, column 1, lines 17-19 * | 1,13 | |
| A | SOV. J. QUANTUM ELECTRON, vol. 12, no. 2, February 1982, pages 161-167; N.S. BELOKRINITSKII et al.: "Prelasing investigations of recombination of chlorine atoms" * Abstract * | 1,13 | TECHNICAL FIELDS SEARCHED (Int. Cl.5) H 01 S |
| A | SOV. TECH. PHYS. LETT., vol. 12, no. 5, May 1986, pages 241-250; V.S. ROGULICH et al.: "Emission by KrF and YeF excimers in a plasma jet" * Page 249, column 1, lines 1-29 * | 1,13 | |
| A | OPT. SPECTROSC. (USSR), vol. 62, no. 2, February 1987, pages 145-147; M.F. VERESH et al.: "Negative absorption at the 812.6-nm atomic lithium line in a continuous He-Li plasma jet" * Figure 1 * -/- | 1,13 | |

The present search report has been drawn up for all claims

| Place of search | Date of completion of the search | Examiner |
|---|---|---|
| THE HAGUE | 30-01-1990 | GALANTI M. |

Application Number

EP  89 31 1149

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | SOV. J. QUANTUM ELECTRON., vol. 8, no. 12, December 1978, pages 1444-1449; A.B. BASHKIN et al.: "Utilization of excited atoms in thermally initiated chemcial lasers in the visible range" * Abstract * ----- | 1,13 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 30-01-1990 | GALANTI M. |

EPO FORM 1503 03.82 (P0401)